# EUROPEAN PATENT SPECIFICATION

(11) **EP 4 365 442 B1**
(45) Date of publication and mention of the grant of the patent: **14.01.2026**
(21) Application number: 22832969.4
(22) Date of filing: 22.06.2022
(51) Int. Cl.: F03D 9/32, E04H 1/12, F03D 13/20, F03D 80/00

(54) **MOBILE STRUCTURE, AND STRUCTURAL UNIT**
MOBILE STRUKTUR UND BAUEINHEIT
STRUCTURE MOBILE ET UNITÉ STRUCTURALE

(30) Priority: 29.06.2021 JP 2021107296; 09.07.2021 JP 2021114314
(43) Date of publication of application: 08.05.2024
(73) Proprietor: NTN Corporation, Osaka-shi, Osaka 530-0005 (JP)
(72) Inventor: KARASAWA, Ryosuke, Kuwana-shi, Mie 511-0867 (JP); MATSUURA, Fumihiko, Kuwana-shi, Mie 511-0867 (JP)
(74) Representative: Cabinet Netter
(86) International application number: PCT/JP2022/024907
(87) International publication number: WO 2023/276821

(56) References cited:
- EP-B1- 2 535 471
- ES-A2- 2 415 250
- FR-A1- 2 898 738
- JP-A- 2015 190 156
- JP-A- 2020 169 533
- JP-A- 2020 169 533
- JP-B1- 6 787 618
- US-A1- 2008 196 758
- US-A1- 2008 196 758
- US-A1- 2011 260 533

## Description

### CROSS REFERENCE TO THE RELATED APPLICATION

This application is based on and claims Convention priority to Japanese patent application No. 2021-107296, filed June 29, 2021 and Japanese patent application No. 2021-114314, filed July 9, 2021.

### BACKGROUND OF THE INVENTION

### (Field of the Invention)

The present invention relates to a mobile structure and a structural unit which can be transported to a desired location for use.

### (Description of Related Art)

A technology proposed earlier includes a movable structure such as a container including a solar panel or a wind turbine generator, in which the interior space of the container can be used for living, office duties, work, rest, etc. (Patent Documents 1, 2). Furthermore, containers for medical services that can be transported to a desired location for use are also known (for example, Patent Document 3).

### [Related Document]

### [Patent Document]

[Patent Document 1] JP Laid-open Patent Publication No. 2013-525626
[Patent Document 2] JP Utility Model Registration No. 3227742
[Patent Document 3] JP Patent No. 6787618

US 2011260533 A1 discloses a mobile structure including a solar panel and a wind turbine generator.

### SUMMARY OF THE INVENTION

Where a wind turbine generator is attached to a movable structure such as a container, the problem is that cogging sounds of the generator of this wind turbine generator propagate to the interior of the container, causing noise indoors. Such the noise deteriorates livability when the interior space of the container is used for living, office duties, medical services, business, etc.

An object of the present invention is to provide a mobile structure that can be used even in non-electrified areas or the like and can suppress noise in a desired space inside the structure.

The present invention provides a mobile structure according to appended claim 1.

According to this configuration, the structure which carries the wind turbine generator and the power supply mechanism can be easily transported because the structure is movable. The electrical equipment provided to the structure can be supplied with power generated by the wind turbine generator, so that the mobile structure can be used even at locations where there is no access to a grid power system or in non-electrified areas. The storage which houses the power supply mechanism faces the inner surface of the peripheral wall on which the wind turbine generator is supported. In addition, the partition wall that partitions the storage from the space is provided inside the structure. Thus, the storage and the partition wall can attenuate noise including cogging sounds of the generator of the wind turbine generator, which could propagate to the room, i.e., the space. In this way, the noise can be suppressed in the desired space inside the structure.

The structure may be a structure having a box-like shape and including a top wall, a bottom wall, and peripheral walls located between the top wall and the bottom wall, the structure having a space inside for at least one of living, office duties, work, rest, business, and medical services. In this case, a common box-like structure including a top wall, a bottom wall, and peripheral walls can be used to provide a mobile structure.

The mobile structure includes a photovoltaic generator provided to the structure, and the power supply mechanism is configured to supply power generated by the photovoltaic generator to the electrical equipment. Hence wind power generation and photovoltaic power generation can take place at the same time, or one of the power generators can compensate for power generation when the other of the power generators does not produce sufficient power.

The photovoltaic generator includes a solar panel and a panel mount that supports the solar panel on the top wall or an outer surface of a peripheral wall of the structure, and the panel mount includes a base member that is welded to a beam of the structure. Since the base member of the panel mount is welded to the beam of the structure, the photovoltaic generator can be rigidly secured to the structure.

A peripheral wall of the structure may include, on an outer surface thereof, an outer peripheral edge part and a recessed part that is recessed toward an inside of the structure with respect to the outer peripheral edge part, and the photovoltaic generator may be supported in the recessed part. Where a photovoltaic generator is added on a peripheral wall of the structure, it is important that the mobile structure including this photovoltaic generator have a dimension that does not exceed the width limit under the Road Traffic Act during transport using a vehicle. According to this configuration, the photovoltaic generator is supported in the recessed part that is recessed inward with respect to the outer peripheral edge part of the peripheral wall, so that the width dimension of the mobile structure as a whole can be reduced, thereby realizing the mobile structure having excellent transportability on a vehicle.

The photovoltaic generator may be supported through a rotation support member provided on an upper end portion of the peripheral wall, and the photovoltaic generator may be openable and closable about a rotation axis of the rotation support member between a closed position in which the photovoltaic generator is placed along the recessed part and an open position in which a lower end portion of the photovoltaic generator is separated from the recessed part. In this case, for example, the photovoltaic generator can be turned to the closed position according to the direction of the sun to improve power generation.

The structure may comprise a shipping container. In this case, the structure can be transferred using a variety of transport means such as truck, railroad, ship, and airplane. With an excellent robustness, the shipping container can also protect devices and others stored therein against possible malfunctions that may be caused by vibrations and impacts during transportation.

The present invention provides a structural unit according to appended claim 6.

The term "space" used herein includes a space for at least one of living, office duties, work, business, rest, temporary shelter in the event of disaster or the like, and medical services.

According to this configuration, the structural unit includes a plurality of structures that are movable, so that the respective structures can be transported in accordance with the loading capacity or the like of the transport means, without being restricted by the width of roads, etc. Furthermore, since the structural unit includes a plurality of structures that are movable, a necessary number of structures can be transported in a flexible manner according to the needs of a person or entity who intends to install the structural unit, i.e., a person or entity responsible for the management of the structural unit.

The combined interior space of the plurality of structures can be used for, e.g., a complex facility including multiple shops, a company facility including multiple departments, and a space for medical services (medical space) including a place for installing medical equipment, a place for storing medical supplies and a consultation room. Therefore, the combined interior space of the multiple structures can be used as a shared space, even if a compact structure is used for each structure according to the width, etc. of roads which the structures pass during transport. In addition, users can easily move between the multiple spaces through the coupling mechanism, so that they are not exposed to wind and rain, etc., and the burden of moving can be reduced. In this way, the structural unit has high transportability and can enhance convenience without placing an excessive burden on users.

In the structural unit, the coupling mechanism may include a coupling mechanism fixing member that is fixed to an outer surface of one of the peripheral walls and provided in an annular shape along a peripheral edge portion of the opening, a coupling mechanism body that is a tubular body for connecting the openings of the adjacent structures, and a sealing member provided between an axial end portion of the coupling mechanism body and the coupling mechanism fixing member. Thus, the spaces of the adjacent structures can be airtightly connected to one another with a simple configuration. Where the structural unit is used as a medical container unit for providing medical services, this makes it possible to prevent possible leakage of pathogenic bacteria and viruses from the inside of the medical container unit to the outside.

In the structural unit, the coupling mechanism body may have a bellows shape that is expandable and contractable in an axial direction. Thus, the coupling mechanism body can expand and contract to absorb misalignment in positions and angles even if the plurality of structures are installed on the ground at positions and angles that are slightly different from the intended positions and angles. Therefore, the structures can easily be connected in an airtight manner

In the structural unit, an exhaust device configured to discharge air within the structural unit to an outside of the structural unit may be installed in only one of a plurality of containers. Where the structural unit is used as a medical container unit, the exhaust device can maintain a negative pressure in the space for providing medical services (hereinafter, sometimes referred to as "medical space"), thereby suppressing possible leakage of pathogenic bacteria and viruses from the inside of the medical container unit to the outside. The space which the exhaust device occupies in the medical space can be reduced as compared with the case where an exhaust device is installed in each structure. As such, more space can be used for providing medical services, so that fulfilling medical services can be provided. Where the exhaust device is installed in only one structure, the number of components can be reduced as compared to a conventional construction in which an exhaust device is installed in each structure, thereby reducing the costs of the structural unit as a whole.

In the structural unit, one of the adjacent structures may include an intake port configured to take air outside of the structural unit into inside of the structural unit, the intake port located in one of the peripheral walls which is opposite to the opening across the space, and the other of the adjacent structures may include the exhaust device on one of the peripheral walls which is opposite to the opening across the medical space. According to this configuration, the air that has been taken into one of the structures from the outside of the structural unit through the intake port is discharged smoothly by the exhaust device in the other of the structures. In this way, it is possible to suppress stagnation of air within the structural unit.

In the structural unit, a power generator configured to produce power supply for electrical equipment provided to the structural unit may be installed in any of the structures. According to this configuration, the electrical equipment can be used according to the needs of a person or entity responsible for the management of the structural unit, even in areas where it is difficult to secure power source such as non-electrified areas and disaster areas. Thus, the possibilities for installation locations of the structural unit can be increased.

The structural unit may further include a hydroelectric generator. This configuration makes it possible to make use of natural energy to operate the electrical equipment according to the needs of a person or entity responsible for the management of the structural unit, enhancing convenience of the structural unit.

### BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views. In the figures,
Fig. 1 is a front view of a mobile structure according to a first embodiment;
Fig. 2 is a horizontal section view of the mobile structure;
Fig. 3 is a rear view of the mobile structure;
Fig. 4 is a side view of the mobile structure;
Fig. 5 is a perspective view that illustrates a relevant part of a wind turbine generator of the mobile structure;
Fig. 6 is an enlarged view that illustrates a tower fixing part of the wind turbine generator in a partially enlarged manner;
Fig. 7 is a perspective view that illustrates an exemplary installation process of the mobile structure;
Fig. 8 is a perspective view that illustrates a wind turbine of the wind turbine generator in a retracted state;
Fig. 9 is a perspective view that illustrates the wind turbine of the wind turbine generator in a use state;
Fig. 10 is a plan view of the mobile structure;
Fig. 11A is a perspective view that illustrates a photovoltaic generator, etc. of the mobile structure;
Fig. 11B is a partially enlarged view showing part XI of Fig. 11A;
Fig. 12 is a side view of a mobile structure according to a second embodiment;
Fig. 13 is a front view of a mobile structure according to a third embodiment;
Fig. 14 is a front view of a mobile structure according to Proposed Reference Example 1, which does not form part of the claimed invention;
Fig. 15 is a front view of a mobile structure according to Proposed Reference Example 2, which does not form part of the claimed invention;
Fig. 16 is a perspective view that illustrates a schematic configuration of a structural unit according to a fourth embodiment;
Fig. 17 is a plan section view that schematically illustrates the structural unit;
Fig. 18 is an exploded perspective view that illustrates a part of a coupling mechanism provided to the structural unit;
Fig. 19A is a sectional view that illustrates a relevant part of the coupling mechanism in a partially enlarged manner;
Fig. 19B is a sectional view that illustrates another relevant part of the coupling mechanism in a partially enlarged manner; and
Fig. 20 is a schematic diagram that illustrates a hydroelectric generator installed in a structural unit according to a fifth embodiment.

### DESCRIPTION OF THE EMBODIMENTS

### [First Embodiment]

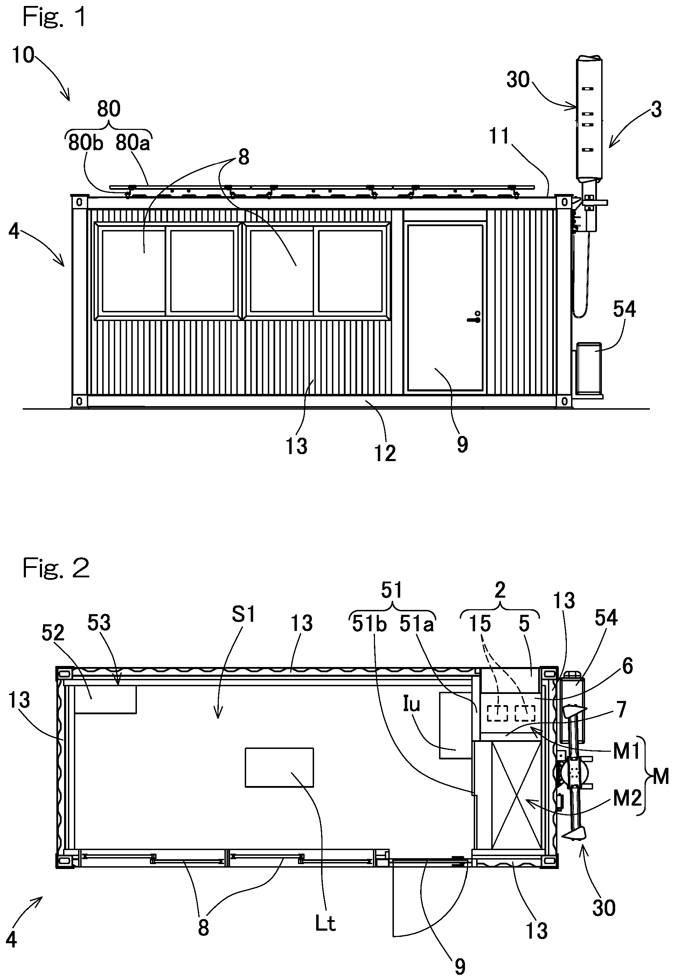

An embodiment of the present invention is described with reference to Fig. 1 to Fig. 11B.

As illustrated in Fig. 1, a mobile structure 4 according to one embodiment includes a box-like structure 4 and a power generation unit 3 which is supported on the structure 4. The power generation unit 3 includes natural energy power generators 30, 80 including both of a wind turbine generator 30 and a photovoltaic generator 80, and a power supply mechanism 2 of Fig. 2 which supplies electric power generated by the power generators 30, 80 to electrical equipment as will be described later. The box-like structure 4 is movable and has inside a space S1 for at least one of living, office duties, work, rest, business, and medical services, as well as a storage M as will be described later.

### <Structure>

The structure 4 as shown in Fig. 1 includes a top wall 11 and a bottom wall 12 that are substantially rectangular in shape, and peripheral walls 13 between the top wall 11 and the bottom wall 12 as shown in Fig. 2, thereby forming a generally cuboidal shape as a whole. In the structure 4, a peripheral wall 13 on the front side as illustrated in Fig. I includes a door 9 through which a person can enter and exit the space S1 (Fig. 2) and an openable and closeable window 8. In the instant example, the structure 4 is a mobile structure which can be transported to move by using a transport means, etc., instead of a self-propelled structure.

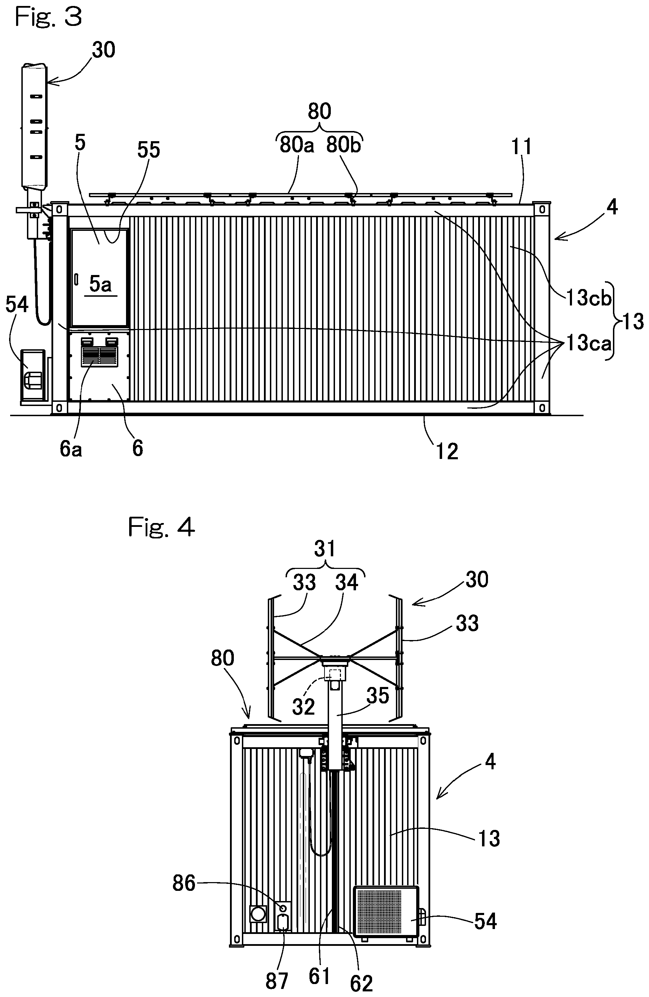

The structure 4 in the instant example is a shipping container. The shipping container has a rigid frame structure that is compliant with the Building Standards Act, improving the flexibility in openings for the window 8, the door 9, a control panel 5 (Fig. 2), a rechargeable battery box 6 (Fig. 3), etc. The "shipping container" used herein is preferably a container having a size that complies with a standard for freight transport containers - such as, for example, a domestic standard for freight containers of a country in which the container is transported. For instance, the "standard" in this context may be a standard established by a relevant domestic administrative agency in that country or an international organization such as the International Organization for Standardization (ISO), or may even be a JR container which serves as a de-facto standard for railroad freight transport containers in Japan.

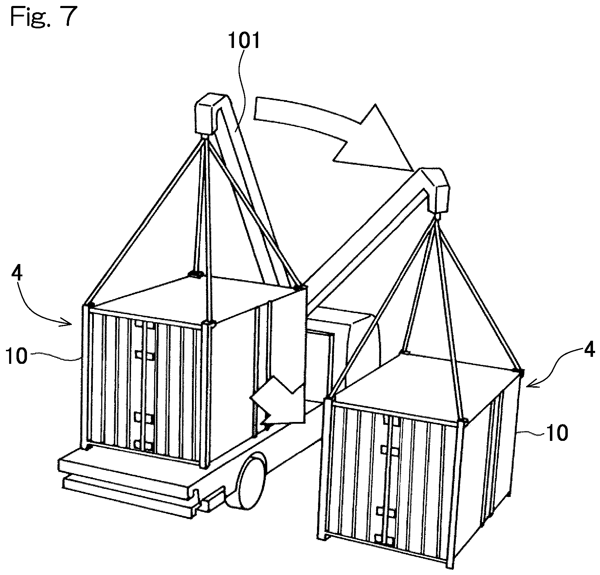

Being configured as a shipping container, the structure 4 can be transferred using a variety of transport means such as truck, railroad, ship, and airplane and be installed using, e.g., a crane 101 of Fig. 7. With an excellent robustness, the shipping container can also protect devices and others stored therein against possible malfunctions that may be caused by vibrations and impacts during transportation. It should be noted that Fig. 7 shows the structure 4 with the wind turbine generator 30 (Fig. 1) and the photovoltaic generator 80 (Fig. 1) omitted.

As illustrated in Fig. 2, the storage M inside the structure 4 includes a machine room M1 in which the control panel 5 of the power supply mechanism 2 and the rechargeable battery box 6 are arranged, and a storeroom M2 adjacent to the machine room M1 with a partition member 7 therebetween. The storage M including the machine room M1 and the storeroom M2 faces the inner surface of the peripheral wall 13 on which the wind power generator 30 is supported. In addition, a partition wall 51 that partitions the storage M from the space S1 is provided inside the structure 4. The space S1 accommodates, for example, electrical equipment 53 such as an indoor unit Iu of an air conditioner, a lighting fixture Lt, and office equipment 52 such as a printer. An outdoor unit 54 of the air conditioner is installed on the outer surface of a peripheral wall 13 of the structure 4. This outdoor unit 54 is also included in the electrical equipment 53.

The partition wall 51 includes a first partition wall portion 51a that separates the machine room M1 from the space S1, and a second partition wall portion 51b that connects to the first partition wall portion 51a and separates the storeroom M2 from the space S1. This second partition wall portion 51b also serves as an opening and closing door of the storeroom M2. In this example, a sliding door is used as the opening and closing door 51b. Instead, a hinged door or a folding door may be used. When the opening and closing door is open, people can move between the storeroom M2 and the space S1. The opening and closing door is closed when the space S1 is used for work or the like. The first partition wall portion 51a is thicker than the second partition wall portion 51b.

The rechargeable battery 15 is housed in the rechargeable battery box 6, which is a storage box compliant with the Fire Service Act, and is isolated from the space S1. For example, the rechargeable battery box 6 is formed of a steel plate with a thickness of 2.3 mm or more and has a substantially rectangular parallelepiped shape, and a distance of 0.1 m or more is secured between the rechargeable battery 15 and the inner surface of the rechargeable battery box 6. Further, the rechargeable battery box 6 ensures necessary ventilation according to the capacity of the rechargeable battery 15. The rechargeable battery box 6 which has a substantially rectangular parallelepiped shape shown in Fig. 3 is installed such that one side surface thereof faces outward and is flush with the outer surface of the peripheral wall 13 on the rear side. A ventilation opening 6a is formed on this side surface of the rechargeable battery box 6. This ventilation opening 6a ventilates the rechargeable battery box 6 and allows gas that may be generated from the rechargeable battery 15 (Fig. 2) to escape to the outside.

An opening 55 is provided above the rechargeable battery box 6 on the peripheral wall 13 on the rear side, and the control panel 5 is fitted and fixed to the opening 55. The control panel 5 has an opening and closing door 5a which faces the outside and is openable and closable, so that the opening and closing door 5a can be opened to perform various control settings, inspections, and other operations. The control panel 5 is installed such that the outer surface of the opening and closing door 5a is flush with the outer surface of the peripheral wall 13 on the rear side when the opening and closing door 5a is closed. The storeroom M2 of Fig. 2 stores, for example, emergency supplies, documents and equipment for office duties, etc.

### <Wind Turbine Generator>

As illustrated in Fig. 4, the wind turbine generator 30 includes a wind turbine 31 and a generator 32 that can be driven by the wind turbine 31 to generate power. The wind turbine 31 is configured as a vertical axis wind turbine. In particular, the wind turbine 31 includes a plurality of blades 33 (e.g., two blades 33 in the instant example) and a blade support 34 providing support for the blades 33. Each of the blades 33 extends in the vertical direction, whereas the blade support 34 is supported on an upper end of a tower 35 so as to be rotatable about the vertical axis by means of a bearing arrangement (not shown). The two blades 33 are positioned angularly apart from each other by 180 degrees about the axis of the tower 35. Further, the tower 35 is secured centrally to an upper part of one of the peripheral walls 4c of the structure 4.

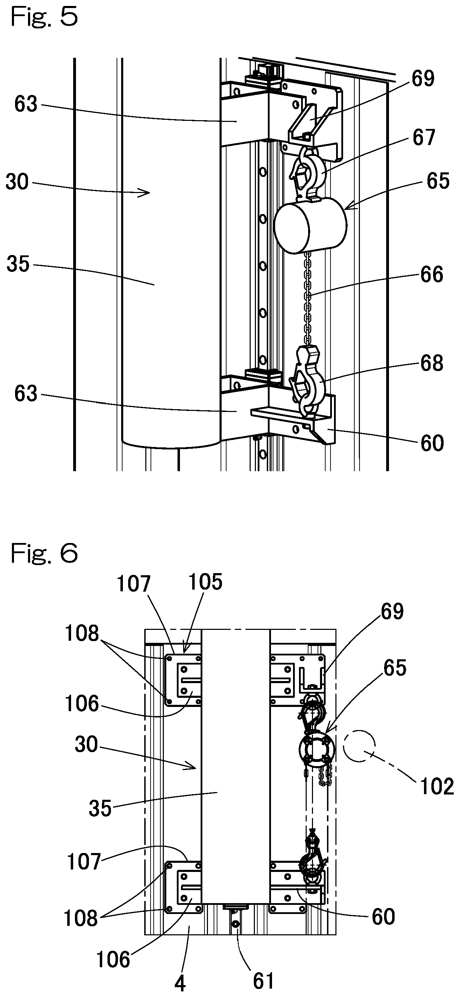

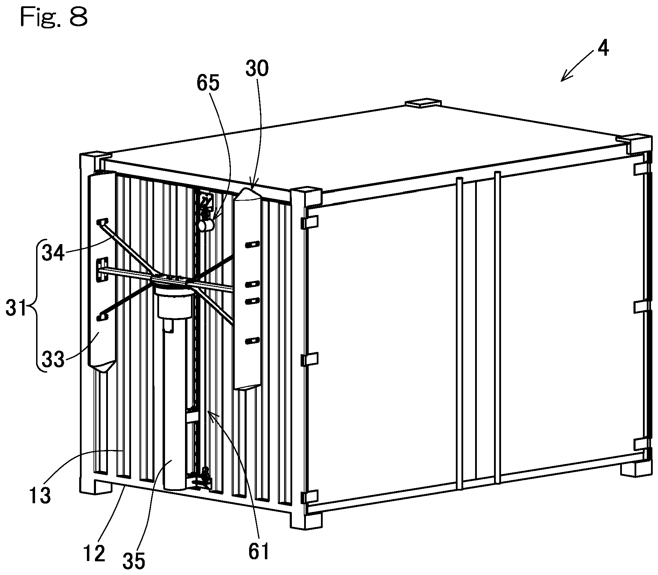

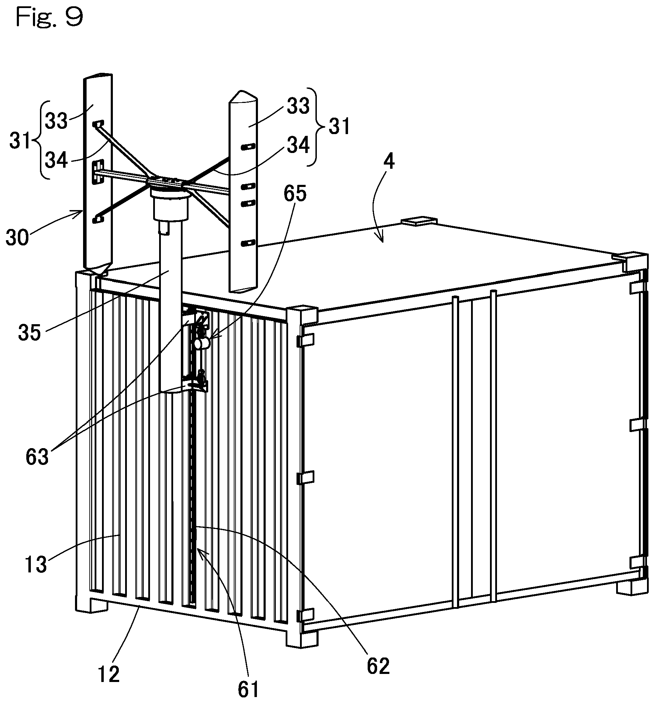

The structure 4 is provided with a linear motion guiding device 61 and a lifting device 65 (Fig. 5). The linear motion guiding device 61 guides the wind turbine generator 30 so that the wind turbine generator 30 can be lifted and lowered between an upper position for use (the position shown in Fig. 9) and a lower position (the position shown in Fig. 8).

The linear motion guiding device 61 is constituted by, e.g., a rolling type linear guide or the like and is arranged on a peripheral wall 13 at one end of the structure 4. The linear motion guiding device 61 includes a fixed rail 62 attached to the peripheral wall 13 so as to extend in the vertical direction and a plurality of upper and lower movable members 63 assembled to the fixed rail 62 so as to be linearly movable in the vertical direction as shown in Fig. 5. The plurality of movable members 63 are attached to a lower portion of the tower 35 of the wind turbine generator 30 at a predetermined interval.

A winding machine for lifting and lowering is used as the lifting device 65 (Fig. 5) that lifts and lowers the wind turbine generator 30, the winding machine being capable of lifting and lowering the wind turbine generator 30 by winding up a winding member 66 connected to the upper part of the structure 4 and the lower part of the tower 35. During transport and installation of the mobile structure, the wind turbine generator 30 is fixed at the lower position (Fig. 8). After installation of the mobile structure, the wind turbine generator 30 is fixed at the upper position (Fig. 9), in which the wind turbine generator 30 is deployed for use.

For example, a winch is used as the winding machine for lifting and lowering. The winding member 66 shown in Fig. 5 is, for example, a rope, a belt, or a chain. Hooks 67, 68 are provided at the upper and lower ends of the winding member 66. The upper hook 67 is engaged with a bracket 69 attached to the upper part of the peripheral wall 13 (Fig. 4) of the structure 4 (Fig. 4), and the lower hook 68 is engaged with a bracket 60 attached to the lower end of the tower 35.

The lifting device 65 is of a manual type in which a drum around which the winding member 66 is wound is rotated using a handle (not illustrated) or the like. Nevertheless, as shown in Fig. 6, the lifting device 65 may be of an electrically-powered type in which the drum is rotated by an electric motor 102.

As illustrated in Fig. 5, in order to deploy the wind turbine generator 30 from the lower position (Fig. 8) to the upper position (Fig. 9), the lifting device 65 winds the winding member 66 which connects the hook 67 engaged with the upper part of the structure 4 (Fig.4) with the hook 68 engaged with the lower part of the tower 35 of the wind turbine generator 30. In this way, the impeller and other components of the wind turbine generator 30 can be easily lifted above the structure 4. When the lifting device 65 including the electric motor 102 shown in Fig. 6 is used, the wind turbine generator 30 can be lifted and lowered simply by operating a switch. In this case, a limit switch (not illustrated) or the like may be attached to the tower 35 and the structure 4 to add a function of automatically stopping the electrically powered lifting device 65 once the wind turbine generator 30 is lifted or lowered completely.

The lifting device 65 may also serve as a tower fixing member that fixes the tower 35 to the structure 4, in conjunction with the linear motion guiding device 61. Alternatively, if necessary, a dedicated fixing member may be provided to fix the wind turbine generator 30 to the structure 4 at the lifted position.

Fig. 6 shows an example where a bolt is used as a tower fixing member 105 to fix the tower 35 of the wind turbine generator 30 to the structure 4. In the instant example, a fixing metal fitting 106 fixed to the tower 35 is fixed with the bolt 108 to a container-side fixing metal fitting 107 which is integrated with the structure 4.

### <Photovoltaic Generator>

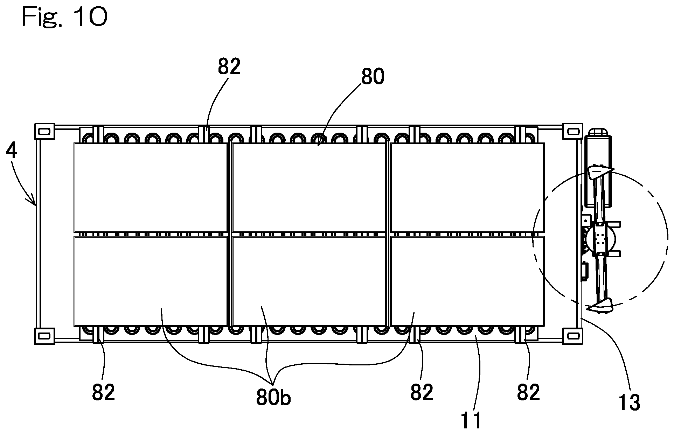

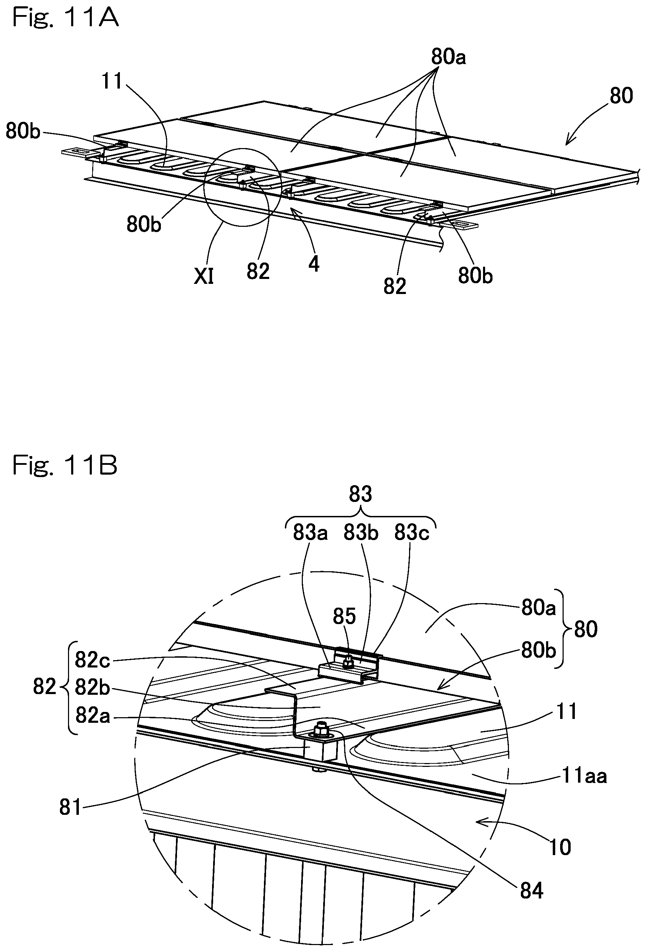

As illustrated in Fig. 10, the photovoltaic generator 80 includes a solar panel 80a that receives sunlight for photoelectric conversion and a panel mount 80b that attaches the solar panel 80a to the structure 4 as shown in Fig. 1. In the instant example, the solar panel 80a is attached onto the top wall 11 of the structure 4 by means of the panel mount 80b. As illustrated in Fig. 11A, the panel mount 80b supports the solar panel 80a on the outer surface of the top wall 11 and chiefly includes a base member 81, a rail member 82, and a fastener metal fitting 83 as shown in Fig. 11B.

A base member 81 is a member that is welded to a beam 11aa of the top wall 11 and is made of, for example, metal in a rectangular shape. A plurality of base members 81 are fixed on the top wall 11 at predetermined intervals. A rail member 82 is removably fixed to the upper surface of the base member 81 with a bolt 84 or the like and extends along one side of the structure 4 corresponding to the width direction of the structure 4. A plurality of rail members 82 shown in Fig. 11A are provided at predetermined intervals in the longitudinal direction of the structure 4. The rail members 82 are arranged parallel to one another.

As illustrated in Fig. 11B, each rail member 82 includes a support plate portion 82a, an upright plate portion 82b, and a panel support plate portion 82c, which are integrally provided from a thin steel plate or the like. The term "integrally provided" used herein means that the support plate portion 82a, the upright plate portion 82b and the panel support plate portion 82c are formed as part or the whole of a single object from a single material by machining or the like, instead of an assemblage of multiple elements.

The support plate portion 82a is supported on the upper surface of the base member 81 and is parallel to the top wall 11. The upright plate portion 82b stands vertically from one side edge part of the support plate portion 82a. The panel support plate portion 82c extends from the upper edge part of the upright plate portion 82b in the opposite direction to the support plate portion 82a and is parallel to the top wall 11. The solar panel 80a is supported on the upper surface of the panel support plate portion 82c.

A fastener metal fitting 83 is a metal fitting for fixing the supported solar panel 80a to the upper surface of the panel support plate portion 82c. A plurality of fastener metal fittings 83 are provided to the solar panel 80a. Each fastener metal fitting 83 includes a fastener metal fitting body portion 83a, a side plate portion 83b, and a fastening plate portion 83c. The fastener metal fitting body portion 83a is removably supported on the panel support plate portion 82c with a bolt 85 or the like. The side plate portion 83b connects to a part of the fastener metal fitting body portion 83a and is parallel to the side surface of the solar panel 80a.

The fastening plate portion 83c fastens the upper surface of the solar panel 80a near both side edges of the solar panel. The fastening plate portion 83c protrudes from an upper edge part of the side plate portion 83b by a predetermined length in the opposite direction to the fastener metal fitting body portion 83a and is parallel to the upper surface of the solar panel 80a. The fastening plate portion 83c and the side plate portion 83b are arranged so as to have an approximately L-shaped cross section. Thus, the fastener metal fitting body portion 83a can be fastened to the panel support plate portion 82c with the bolt 85 or the like, so that the fastening plate portion 83c rigidly fastens the upper surface of the solar panel 80a near both side edges of the solar panel, with the side plate portion 83b parallel to the side surface of the solar panel 80a. The solar panel 80a can be removed from the panel mount 80b by removing the bolt 85 from the panel support plate portion 82c.

### <Power Supply Mechanism and the Like>

As illustrated in Fig. 2, the power supply mechanism 2 includes the control panel 5 and the rechargeable battery 15. The control panel 5 applies a control to direct power generated by the power generators 30, 80 (Fig. 1) into the rechargeable battery 15 and to draw the directed power in the rechargeable battery 15 to the electrical equipment 53. The control panel 5 is comprised of, among other things, a computer, a program that is executed by the computer, and a variety of electronic circuits. By way of example, the control panel 5 includes an AC to DC converter that converts AC power generated by the power generators 30, 80 (Fig. 1) to a DC voltage that can be stored in the rechargeable battery 15, and an inverter that converts power stored in the rechargeable battery 15 to a sinusoidal AC wave, like that of commercial AC power, or to a square AC wave.

The control panel 5 can supply power to electrical equipment disposed outside the structure 4. In particular, an electric outlet 86 is provided on a peripheral wall 13 of the structure as shown Fig. 4, and the electric outlet 86 is electrically connected to the control panel 5 (Fig. 3). The external electrical equipment can be used once the power cable of the electrical equipment is connected to the electric outlet 86. The mobile structure 1 includes a power supply connecting part that receives power supply from a grid power system, a fuel generator, a battery installed in an electric vehicle (abbreviation: EV) or a hybrid electric vehicle (abbreviation: HEV), or other power supplying devices. The power supply connecting part in the form of a charging plug 87 is provided on a peripheral wall 13, and the charging plug 87 is electrically connected to the control panel 5 (Fig. 3). In this case, for example, it is possible to use the wind turbine generator 30 or the photovoltaic generator 80 as a primary power supply while using an external power source such as a grid power system to compensate for temporary shortage of power generation or, alternatively, to use a grid power system or the like as a primary power supply while utilizing the wind turbine generator 30 or the photovoltaic generator 80 as a backup power supply in the event of a power outage.

### <Effects and Advantages>

According to the mobile structure 4 discussed thus far, the structure 4 which carries the wind turbine generator 30, the photovoltaic generator 80 (Fig. 1) and the power supply mechanism 2 (Fig. 2) can be easily transported because the structure 4 is movable. The electrical equipment 53 (Fig. 2) provided to the structure 4 can be supplied with power generated by the wind turbine generator 30 or the photovoltaic generator 80, so that the mobile structure 4 can be used even at locations where there is no access to a grid power system or in non-electrified areas. The storage M which houses the power supply mechanism 2 of Fig. 2 faces the inner surface of the peripheral wall 13 on which the wind turbine generator 30 is supported. In addition, the partition wall 51 that partitions the storage M from the space S1 is provided inside the structure 4. Thus, the storage M and the partition wall 51 can attenuate noise including cogging sounds of the generator 32 (Fig. 4) of the wind turbine generator 30, which could propagate to the room, i.e., the space S1. In this way, the noise can be suppressed in the desired space S1 inside the structure 4.

The storage M which houses the power supply mechanism 2 including the control panel 5 and the rechargeable battery 15 faces the inner surface of the peripheral wall 13 on which the wind turbine generator 30 is supported. This makes it possible to closely dispose the wind turbine generator 30, the control panel 5 and the rechargeable battery 15, thereby shortening the wires for electrically connecting them. Thus, the costs can be reduced.

Since the mobile structure 4 includes the wind turbine generator 30 and the photovoltaic generator 80 (Fig. 1), wind power generation and photovoltaic power generation can take place at the same time, or one of the power generators can compensate for power generation when the other of the power generators does not produce sufficient power.

In the photovoltaic generator 80 shown in Fig. 11B, the base member 81 of the panel frame 80b is welded to the beam 11aa of the top wall 11, so that the photovoltaic generator 80 can be rigidly secured to the top wall 11 of the structure 4. Thus, the photovoltaic generator 80 has sufficient rigidity and will not be undesirably detached from the structure 4 in the event of a typhoon, etc.

As illustrated in Fig. 8, the wind turbine generator 30 is placed at a position lower than the linear motion guiding device 61 and the lifting device 65, so that the mobile structure 4 can be easily transported on a vehicle (Fig. 7) without exceeding the height limit under the Road Traffic Act.

As shown in Fig. 3, one side surface of the rechargeable battery box 6 and the opening and closing door 5a of the control panel 5 face outward and are flush with the outer surface of a peripheral wall 13. Therefore, the mobile structure 4 can be easily transported on a vehicle (Fig. 7) without exceeding the width limit under the Road Traffic Act.

The second partition wall portion 51b that is a part of the partition wall 51 shown in Fig. 2 also serves as the opening and closing door of the storeroom M2, so that the number of the components of the mobile structure 4 can be reduced to simplify the construction.

### <Further Embodiments>

In the following description, the same reference numerals are used to denote features that correspond to those previously described in the respective embodiments, and overlapping description is omitted. Where only a part of a configuration is described, the rest of the configuration is to be construed as being the same as the previously described embodiments unless otherwise indicated. The same configurations provide the same effects. It is possible not only to combine the parts that have been particularly described in the respective embodiments but also to partly combine the embodiments unless there is any hindrance to such a combination.

### [Second Embodiment]

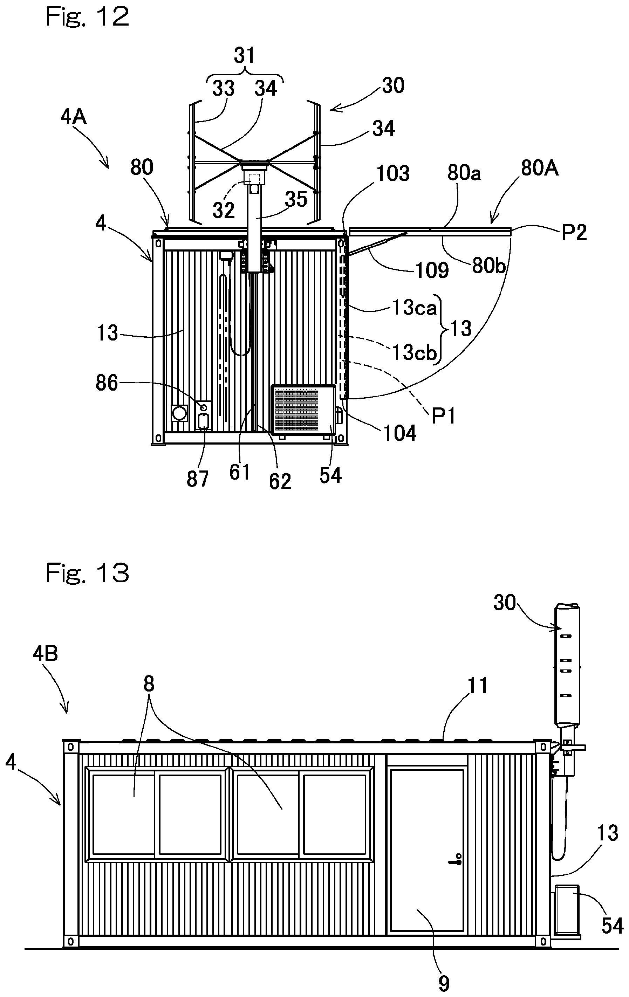

As illustrated in Fig. 12, a further photovoltaic generator 80A may be added on a peripheral wall 13 of the structure 4. In the instant example, the further photovoltaic generator 80A is provided only on the peripheral wall 13 on the rear side. This peripheral wall 13 includes, on the outer surface, an outer peripheral edge part 13ca (see Fig. 3) and a recessed part 13cb that is recessed (i.e., offset) toward the inside of the structure with respect to the outer peripheral edge part 13ca. The photovoltaic generator 80A is supported in the recessed part 13cb.

The photovoltaic generator 80A is supported through a rotation support member 103 provided on an upper end part of the peripheral wall 13. For example, a hinge or the like is used as the rotation support member 103. Specifically, a panel mount 80b for the photovoltaic generator 80A is supported on an upper end part of the peripheral wall 13 through the rotation support member 103 such as a hinge or the like. The photovoltaic generator 80A is openable and closable about a rotation axis of the rotation support member 103 between a closed position P1 in which the photovoltaic generator is placed along the recessed part 13cb and an open position P2 in which the lower end portion of the photovoltaic generator 80A is separated from the recessed part 13cb.

A gas spring 109 is provided between the panel mount 80b and the upper end part of the peripheral wall 13. A reaction force of the high-pressure gas or the like sealed in the cylinder body of the gas spring 109 can be used to assist the opening and closing operation of the photovoltaic generator 80A. Furthermore, the photovoltaic generator 80A can be held in the open position P2 using the gas spring 109. A stopper 104, which is a locking mechanism that holds the photovoltaic generator 80A in the closed position P1, is provided between the panel mount 80b and the lower end part of the peripheral wall 13. When the photovoltaic generator 80A is retained in the closed position P1, an operator can release the stopper 104 so that the photovoltaic generator 80A can be easily flipped up by the gas spring 109.

According to this mobile structure 4A, the amount of power generation can be improved compared to the above-described embodiment because the further photovoltaic generator 80A is provided. The mobile structure can have a reduced overall width dimension because the photovoltaic generator 80A is supported in the recessed part 13cb which is recessed inward with respect to the outer peripheral edge part 13ca of the peripheral wall 13. Therefore, the mobile structure 4A can be easily transported on a vehicle (Fig. 7) without exceeding the width limit under the Road Traffic Act. The further photovoltaic generator 80A provided on the peripheral wall 13 makes it possible to make up a deficiency in power generation when sufficient power is not generated depending on the region or the application.

The further photovoltaic generator 80A may be provided on the peripheral wall on the front side, or the further photovoltaic generators 80A may be provided on the peripheral walls both on the front side and the rear side. Furthermore, a further photovoltaic generator(s) 80A can be provided on the peripheral wall(s) on one or both of left and right sides.

### [Third Embodiment]

As illustrated in Fig. 13, a mobile structure 4B may include a wind turbine generator 30 as the only type of natural energy power generator. This makes it possible to simplify the construction and reduced the costs because the photovoltaic generator is omitted.

The mobile structure may include a battery monitor that displays a remaining power of a rechargeable battery, or a power consumption by electrical equipment, etc. In this case, a user or the like of the mobile structure can check the remaining power of the rechargeable battery, etc., displayed on the battery monitor and save power on the electrical equipment as needed so as to suitably cope with fluctuation in power generation relying on natural energy.

As an alternative to the shipping container, the structure may comprise a simple transportable building.

The solar panel may be deployed around the structure 4. In the case where the solar panel is deployed around the structure 4, or in any of the embodiments discussed so far, the panel mount may be equipped with a mechanism capable of changing the angle of the solar panel according to the direction of the sun.

### <Proposed Reference Example 1>

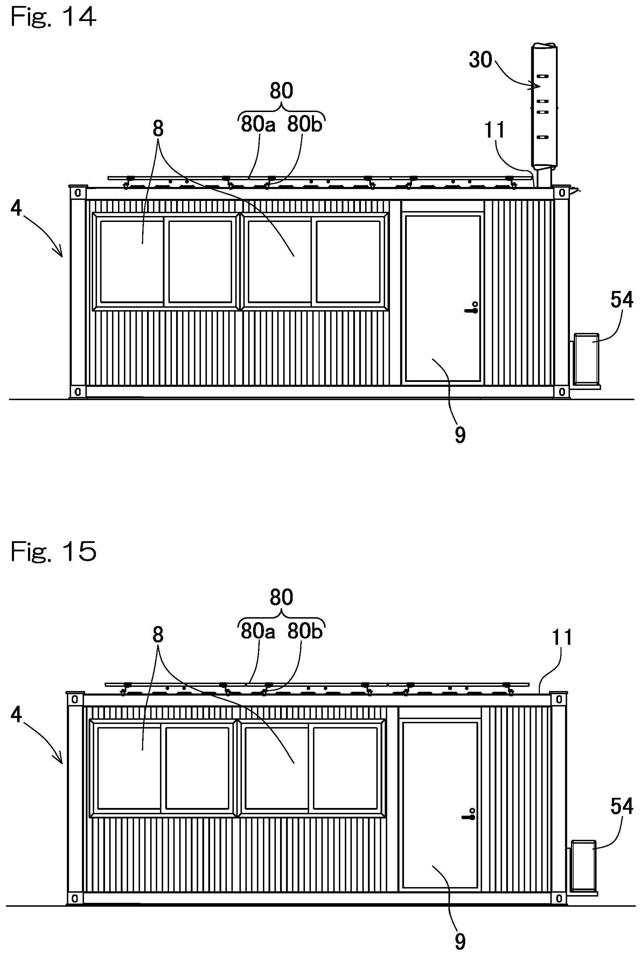

As a Proposed Reference Example, the wind turbine generator 30 may be supported on the top wall 11 of the structure 4 as shown in Fig. 14. A mobile structure according to this Proposed Reference Example may be described as follows:
A mobile structure including:
a structure having a box-like shape, the structure being movable and having a space inside for at least one of living, office duties, work, rest, business, and medical services;
a wind turbine generator supported on an end portion of a top wall of the structure in a longitudinal direction of the structure; and
a power supply mechanism configured to supply power generated by the wind turbine generator to electrical equipment provided to the structure,
wherein the structure has a storage inside, the storage housing the power supply mechanism,
the storage faces an inner surface of a peripheral wall of the structure which is connected to the end portion of the top wall in the longitudinal direction on which the wind turbine generator is supported, and
the structure includes a partition wall inside, the partition wall partitioning the storage from the space.

In this case, the number of the components of the mobile structure can be reduced to simplify the construction. Therefore, the manufacturing costs can be reduced.

### <Proposed Reference Example 2>

As a Proposed Reference Example, as illustrated in Fig. 15, the structure 4 may include a photovoltaic generator 80 as the only type of natural energy power generator. A mobile structure according to this Proposed Reference Example may be described as follows:
A mobile structure including:
a structure having a box-like shape, the structure being movable and having a space inside for at least one of living, office duties, work, rest, business, and medical services;
a photovoltaic generator provided to the structure; and
a power supply mechanism configured to supply power generated by the photovoltaic generator to electrical equipment provided to the structure,
wherein the structure has a storage inside, the storage housing the power supply mechanism, and
the structure includes a partition wall inside, the partition wall partitioning the storage from the space.

In this case, for instance, noise caused by resonance or the like between the inverter of the control panel and the electrical equipment can be suppressed.

As mentioned above, containers for medical use are already known. however, only a limited number of medical facilities are equipped with appropriate equipment. Use of a medical container as the one disclosed in Patent Document 3 would be practical in that medical services can be provided in desired locations such as disaster areas.

For the purpose of providing more fulfilling medical services, the problem is that the medical container needs to carry a lot of equipment and supplies therein, resulting in an increase in the size of the medical container. However, there is a limit to increasing the size of the medical container because of the restriction by the width of roads which a transport means carrying the medical container passes when transporting the medical container.

Therefore, it is conceivable to provide a plurality of small medical containers that can be transported even in a route passing narrow roads, and install the containers in close proximity to each other to provide medical services. In that case, however, medical personnel and patients must move between the plurality of medical containers, placing a heavy burden on medical personnel and patients.

In addition, it is conceivable to arrange a plurality of containers in a container group or a container unit at a predetermined location and use such a container unit as, for example, a commercial facility, a company facility, a disaster recovery facility, etc. In such a case, users who visit one container would have to go out of that container and enter another container from outside, which is inconvenient and troublesome in that the users may be exposed to wind and rain outside the containers.

Therefore, a fourth embodiment of the present invention, which will be described below, provides a structural unit which has high transportability and can enhance convenience without placing an excessive burden on users.

### [Fourth Embodiment]

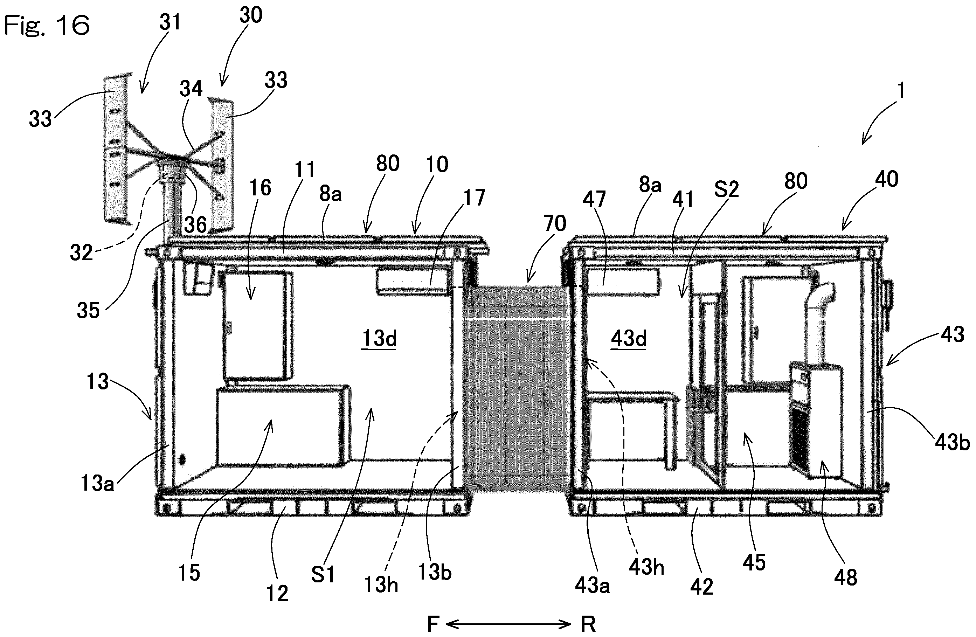

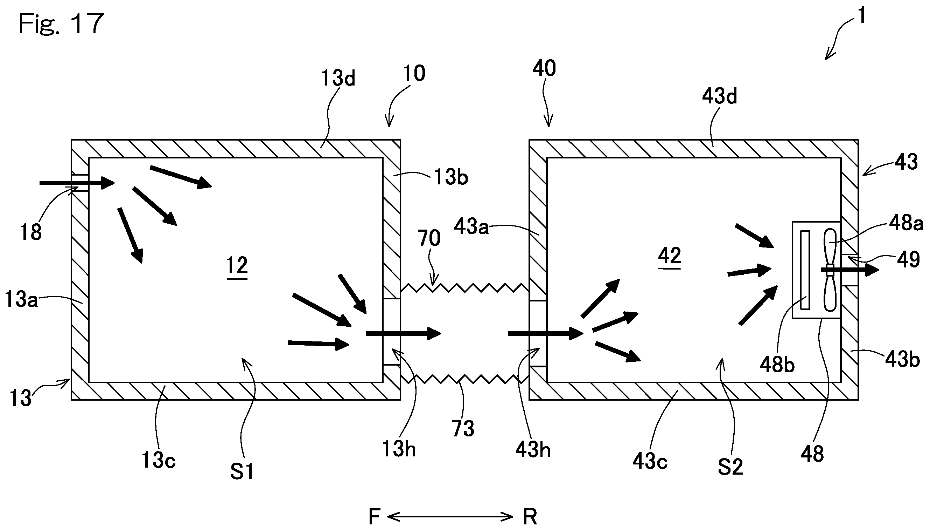

The fourth embodiment of the present invention is described with reference to Fig. 16 to Fig. 17. Fig. 16 and Fig. 17 show a structural unit 1 according to one embodiment of the present invention. Fig. 16 shows the respective structures with their peripheral walls omitted on the front side. The structural unit 1 of the instant example is used as a medical container unit for providing medical services. It should be noted that the structural unit 1 is not limited to a container unit for medical use and can be used as a facility for living, office duties, work, business, rest, and temporary shelter in the event of disaster or the like.

As illustrated in Fig. 16, the structural unit 1 includes a plurality of structures including a first container 10 and a second container 40, a coupling mechanism 70, and power generators including a wind turbine generator 30 and a photovoltaic generator 80. The first container 10 is substantially the same as the container 10 (structure 4) described in the first embodiment.

In the following discussion, the front side refers to the side on which the wind turbine generator 30 is located on the first container 10 as will be described later. The rear side refers to the side on which the coupling mechanism 70 is coupled to the first container 10. The lower side refers to the direction (side) toward which the gravity acts. The upper side refers to the opposite side to the side toward which the gravity acts. The right side refers to the right-hand side with respect to the front side. The left side refers to the lefthand side with respect to the front side.

### <First Container>

As illustrated in Fig. 16, the first container 10 has a generally cuboidal shape as a whole and includes a first top wall 11, a first bottom wall 12, and first peripheral walls 13. The first container 10 is movable. The first top wall 11 and the first bottom wall 12 are plate members that are substantially rectangular in shape and are arranged so as to extend substantially perpendicular to the direction in which the gravity acts. As illustrated in Fig. 17, the first peripheral walls 13 include a front wall portion 13a, a rear wall portion 13b, a left wall portion 13c, and a right wall portion 13d. The front wall portion 13a, the rear wall portion 13b, the left wall portion 13c, and the right wall portion 13d are plate members that are substantially rectangular in shape and are arranged so as to extend substantially perpendicular to the horizontal direction. The front wall portion 13a and the rear wall portion 13b are arranged opposite to each other in the front-to-rear direction. The left wall portion 13c and the right wall portion 13d are arranged opposite to each other in the left-to-right direction. The space surrounded by the first top wall 11 (Fig. 16), the first bottom wall 12 (Fig. 16), and the first peripheral walls 13 provides a medical space S1.

### <Second Container>

As illustrated in Fig. 16, as with the first container 10, the second container 40 has a generally cuboidal shape as a whole and includes a second top wall 41, a second bottom wall 42, and second peripheral walls 43. The second container 40 is movable. As with the first peripheral walls 13, the second peripheral walls 43 include a front wall portion 43a, a rear wall portion 43b, a left wall portion 43c, and a right wall portion 43d. The space surrounded by the second top wall 41, the second bottom wall 42, and the second peripheral walls 43 provides a medical space S2.

The structural unit 1 according to this embodiment is separated into, for example, the first container 10, the second container 40, and the coupling mechanism 70 (to be exact, part of the coupling mechanism 70) to be transferred using a logistics and transport means such as truck, railroad, ship, and airplane. A truck used to transport such a container may be, for example, a truck-mounted crane (or a truck loader crane). Once the respective containers are delivered (transported) to an installation site by using a truck-mounted crane, the containers may be unloaded by using a crane on the truck-mounted crane. However, the method of transporting the containers is not limited to this process.

As illustrated in Fig. 17, in the instant example, the first container 10 and the second container 40 are disposed such that the rear wall portion 13b and the front wall portion 43a face each other in the front-to-rear direction. The rear wall portion 13b of the first container 10 has a first opening 13h in the form of a substantially rectangular hole. Similarly, the front wall portion 43a of the second container 20 has a second opening 43h in the form of a substantially rectangular hole. The first opening 13h and the second opening 43h substantially match each other when viewed either from the front side or the rear side. The first opening 13h and the second opening 43h are dimensioned and shaped such that medical personnel and patients can easily pass through the openings.

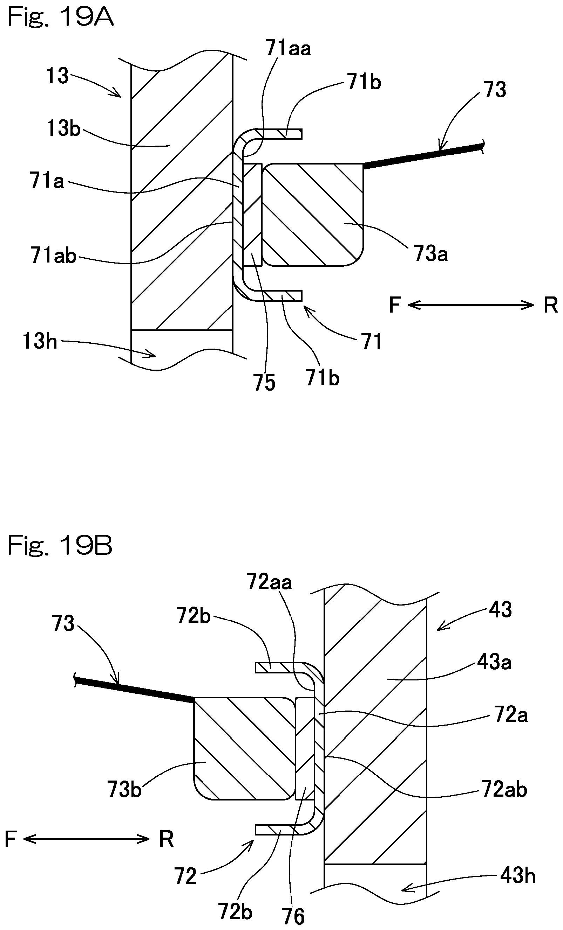

In the structural unit 1 of the present embodiment, once the first container 10 and the second container 40 are installed at a target location, the first opening 13h and the second opening 43h are connected (coupled) to each other with a coupling mechanism body 73 and seal members 75, 76 (Fig. 19A, Fig. 19B) as will be described later. In this way, the first medical space S1 and the second medical space S2 can be connected airtightly. The coupling mechanism body 73 and the seal members 75, 76 shown in Fig. 19A, Fig. 19B are also transported to the site (installation location) using a logistics and transport means. Note that the containers may be transported with the coupling mechanism body 73 attached to one or both containers.

### <Coupling Mechanism>

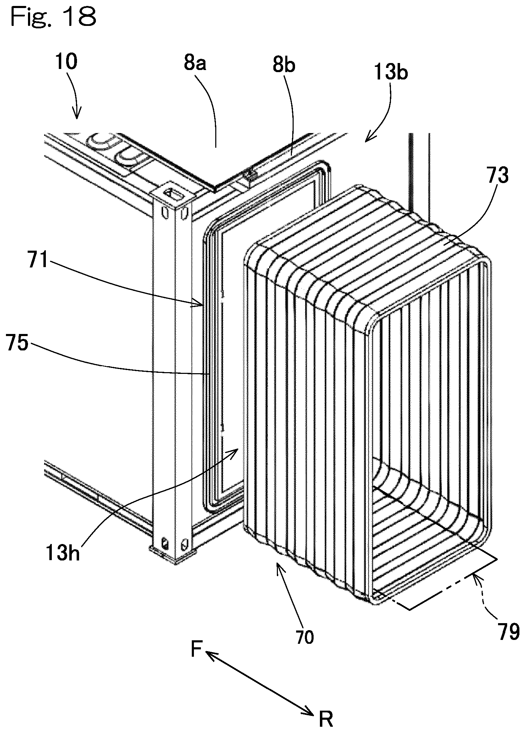

The coupling mechanism 70 is described in detail below with reference to Fig. 18 and Fig. 19A, Fig. 19B. The coupling mechanism 70 of Fig. 18 includes a first connection member 71 (coupling mechanism fixing member), a second connection member 72 (coupling mechanism fixing member) shown in Fig. 19B, the coupling mechanism body 73, and a first seal member 75 (seal member) shown in Fig. 19B, and a second seal member 76 (seal member) shown in Fig. 19B.

The first connection member 71 shown in Fig. 19A is formed into a rectangular frame shape by combining a plurality of channel steels (channel members). Specifically, a pair of channel steels parallel to the vertical direction, a pair of channel steels parallel to the left-and-right direction, and four channel steels arranged at the four corners of the frame are joined by welding or the like and are formed into a frame shape. The first connection member 71 is attached to the rear surface (outer surface) of the rear wall portion 13b of the first peripheral walls 13 such that the first connection member 71 annularly surrounds the first opening 13h from the outer peripheral side.

Specifically, the first connection member 71 has a concave cross-sectional shape when cut perpendicularly to the longitudinal direction. In particular, the first connection member 71 includes an upright plate portion 71a which faces the rear surface of the rear wall portion 13b, and flange parts 71b which extend perpendicularly to the upright plate portion 71a from opposite ends of the upright plate portion 71a in the widthwise direction. The upright plate portion 71a and the flange parts 71b are integrally provided. The term "integrally provided" used herein means that the upright plate portion 71a and the flange parts 71b are formed as part or the whole of a single object from a single material by, e.g., pressing and machining or the like, instead of an assemblage of multiple elements.

Note that the first connection member 71 is not limited to one having the above-mentioned shape. The first connection member 71 may be formed of an annular frame without breaks over the entire circumference including the upper, lower, right, and left parts or may have a cross section having a convex shape, a flat plate shape, an L-shape, or an H-shape when cut vertically.

The first connection member 71 is fixed to the rear wall portion 13b (peripheral wall 13) by welding or the like, with the outer surface 71ab of the upright plate portion 71a in contact with the rear surface of the rear wall portion 13b. In this state, the inner surface 71aa of the upright plate portion 71a is exposed toward the rear side. The first seal member 75 having a plate shape in cross section is arranged so as to come into contact with the inner surface 71aa of the upright plate portion 71a. The first seal member 75 is attached annularly (continuously) over the entire circumference of the inner surface 71aa, for example, with an adhesive or the like. However, the method of fixing the first connection member 71 to the peripheral wall 13 and the method of fixing the first seal member 75 to the first connection member 71 are not limited to those described above.

The second connection member 72 of Fig. 19B has the same configuration as the first connection member 71 (Fig. 19A). That is, the second connection member 72 includes an upright plate portion 72a and is fixed to the front wall portion 43a (peripheral wall 43) with the outer surface 72ab of the upright plate portion 72a in contact with the front surface of the front wall portion 43a. The second seal member 76 has the same configuration as the first seal member 75 (Fig. 19A) and is annularly attached to the entire circumference of the inner surface 72aa of the upright plate portion 72a. Note that the seal members 75, 76 (Fig. 19A, Fig. 19B) may be made of an elastic material such as rubber.

The coupling mechanism body 73 is a tubular member having a rectangular cross section when cut perpendicular to the axial direction. In other words, the coupling mechanism body 73 includes a pair of surfaces (side surfaces) that extend generally perpendicularly to the left-and-right direction and a pair of surfaces (top surface and bottom surface) that extend generally perpendicularly to the vertical direction and defines a hollow area (internal space) surrounded by these surfaces. The coupling mechanism body 73 has, in the axial direction, one side that is open toward the front side the other side that is open toward the rear side. In the accompanying drawings, the one axial side of the coupling mechanism body 73 is indicated with letter F, and the other axial side is indicated with letter R.

As described above, the coupling mechanism body 73 is arranged such that the axial direction of the coupling mechanism body is directed in the front-to-rear direction. The coupling mechanism body 73 has a bellows shape (in other words, an accordion shape) that expands and contracts in the axial direction. Furthermore, the coupling mechanism body 73 has flexibility to bend in the radial direction due the bellows shape. Therefore, the coupling mechanism body 73 can be bent and deformed radially outward so that the front end portion or the rear end portion thereof can be moved with respect to the axis of the coupling mechanism body 73.

The axial ends, i.e., the front end portion and the rear end portion of the coupling mechanism body 73 are flanged as shown in Fig. 19A and Fig. 19B. In the coupling mechanism body 73, the flange part 73a of one axial side (front side) of shown in Fig. 19A is formed with a member or shape having higher rigidity than the middle portion. The flange part 73a is a so-called inward flange part that protrudes radially inward from one axial end portion of the bellows-shaped part. The flange part 73b on the other axial side (rear side) of the coupling mechanism body 73 shown in Fig. 19B also has the same shape as the flange part 73a.

As illustrated in Fig. 19A and Fig. 19B, the entire circumference of the flange part 73a at the front end portion of the coupling mechanism body 73 can be brought into surface contact with the first seal member 75, and at the same time, the entire circumference of the flange part 73b at the rear end portion of the coupling mechanism body 73 can be brought into surface contact with the second seal member 76. In this state, the coupling mechanism body 73 is fixed to the seal members 75, 76. The method of fixing the coupling mechanism body 73 to the seal members 75, 76 is not particularly limited. For example, an adhesive may be used to fix them.

A bridge plate 79 (see Fig. 18) is provided in the lower end portion of the inner space of the coupling mechanism body 73. The bridge plate 79 (Fig. 18) spans from the flange part 73a at one axial side to the flange part 73b at the other axial side of the coupling mechanism body 73. With this configuration, medical personnel and patients can walk on the bridge plate 79 inside the coupling mechanism body 73 to easily come and go between the first medical space S1 (Fig. 17) and the second medical space S2 (Fig. 17).

As described above, the structural unit 1 of Fig. 16 according to this embodiment includes the first container 10 and the second container 40 that are movable, so that the first and second containers 10, 40 can be transported in accordance with the loading capacity or the like of the transport means, without being restricted by the width of roads, etc. Furthermore, since the first and second containers 10, 40 are movable, a necessary number of containers can be transported in a flexible manner according to the needs of a person or entity who intends to install the structural unit 1, i.e., a person or entity responsible for the management of the structural unit 1. The first opening 13h and the second opening 43h are airtightly connected through the coupling mechanism 70. Therefore, the combined space of the first medical space S1 and the second medical space S2 can be used as a shared space to provide medical services, so that fulfilling medical services can be provided. Medical personnel and patients can easily move between the first medical space S1 and the second medical space S2 via the coupling mechanism, so that they are not exposed to wind and rain, etc., and the burden of moving can be reduced.

Furthermore, the coupling mechanism 70 provided in the structural unit 1 according to the present embodiment includes the first connection member 71, the second connection member 72, the coupling mechanism body 73, the first seal member 75, and the second seal member 76 as shown in Fig. 19A and Fig. 19B. Therefore, the first medical space S1 and the second medical space S2 can be airtightly connected with a simple configuration.

Further, the coupling mechanism body 73 has a bellows shape. Thus, the coupling mechanism body 73 has stretchability and flexibility, so that the first opening 13h and the second opening 43h can be connected in an airtight manner even if the first opening 13h and the second opening 43h are located to each other at a slightly different distance from the intended distance, or even if the first opening 13h and the second opening 43h are not arranged strictly parallel to each other. That is, the expansion/contraction and deflection of the bellows-shaped coupling mechanism body 73 absorb possible misalignment in the interval and angle at which the openings 13h, 43h are arranged.

### <Wind Turbine Generator>

The wind turbine generator 30 of Fig. 16 produces power supply for electrical equipment provided to the respective containers 10, 40. The wind turbine generator 30 is installed at an upper part of the front end portion of the first container 10. The wind turbine generator 30 includes a wind turbine 31 and a generator 32 that can be driven by the wind turbine 31 to generate power. The wind turbine 31 is configured as a vertical axis wind turbine. In particular, the wind turbine 31 includes a plurality of blades 33 (e.g., two blades 33 in the instant example) and a blade support 34 providing support for the blades 33. Each of the blades 33 extends in the vertical direction, whereas the blade support 34 is supported on an upper end of a tower 35 so as to be rotatable about the vertical axis by means of a bearing arrangement (not shown). The two blades 33 are positioned angularly apart from each other by 180 degrees about the axis of the tower 35. Further, the tower 35 is secured centrally to an upper part of one of the first peripheral walls 13 (the front wall portion 13a in the instant example) of the first container 10.

The generator 32 of the wind turbine generator 30 is disposed inside a generator casing 36 that is attached to the upper end part of the tower 35. Stationary race(s) of the bearing arrangement is/are fitted to the generator casing 36, whereas rotary race(s) of the bearing arrangement is/are coupled to the blade support 34. The generator 32 can generate power as a rotor of the generator 32 rotates inside the generator casing 36 along with the rotary race(s) in response to the revolutions of the wind turbine 31. For example, an induction generator or a synchronous generator can be used for the generator 32.

A vertical axis wind turbine 31 is suited as the wind turbine for use with the wind turbine generator 30 that is provided to the medical container 1 in that a vertical axis wind turbine can be configured in a relatively small size but still can receive wind to generate power. Nevertheless, the wind turbine 31 is not limited to this type and may alternatively be a horizontal axis wind turbine.

Power generated by the generator 32 of the wind turbine generator 30 is stored in the rechargeable battery 15. Power stored in the rechargeable battery 15 is converted by an inverter 16 or the like into single-phase AC power or three-phase AC power of 100 V or 200 V, which is the same as the AC commercial power source, and is supplied to the electrical equipment provided to the containers 10, 40. Although illustration and description are omitted, in this embodiment, the rechargeable battery 15 is likewise housed in the rechargeable battery box which is placed inside the storage, and a partition wall is likewise provided to separate the storage from space S1, as with the first embodiment.

Power generated by the generator 32 of the wind turbine generator 30 is supplied to electrical equipment installed in the first container 10 and/or the second container 40 via a wiring system (not shown). An air conditioner 17 and an air conditioner 47 shown in Fig. 16 are examples of the electrical equipment. The electrical equipment may include various known medical equipment, lighting equipment, and the like. To give specific examples, the electrical equipment may include an MRI device, a CT device, an X-ray device, a radiation therapy device, an electronic thermometer, a blood pressure monitor, a cardiac pacemaker, a dialysis device, a lighting device, an air conditioner, and the like.

### <Photovoltaic Generator>

The photovoltaic generator 80 produces power supply for electrical equipment provided to the containers 10, 40. In this embodiment, a photovoltaic generator 80 is installed in each of the first container 10 and the second container 40. The photovoltaic generator 80 includes a solar panel 8a that receives sunlight for photoelectric conversion and a panel mount 8b (see Fig. 18) that attaches the solar panel 8a to the container 10, 40. In the instant example, the solar panel 8a is attached onto the top wall 11, 41 of the container 10, 40 by means of the panel mount 8b (Fig. 18). Depending on the direction of solar radiation or the installation environment, the solar panel 8a may alternatively be disposed on a given one of the peripheral walls 13, 43 of the container 10, 40 or deployed around the container 10, 40. The panel mount 8b may be equipped with a mechanism capable of changing the angle of the solar panel 8a according to the direction of the sun.

Part of the wiring system may be arranged along the inner surface(s) of the first container 10 and/or the second container 40. Further, part of the wiring system may pass the internal space of the coupling mechanism body 73 and be connected to the electrical equipment installed in the second container 70.

Next, the flow of air in the structural unit 1 is specifically explained with reference to Fig. 17. The straight arrows in Fig. 17 indicate the flow of air inside the structural unit 1. An intake port 18 is provided in the front wall portion 13a of the peripheral walls 13 of the first container 10. That is, the intake port 18 is provided in a wall portion of the peripheral walls 13 which is opposite to the first opening 13h across the first medical space S1. The intake port 18 is provided so as to penetrate an upper part of the front wall portion 13a in the front-to-rear direction. An exhaust port 49 is provided in the rear wall portion 43b of the peripheral walls 43 of the second container 40. That is, the exhaust port 49 is provided in a wall portion of the peripheral walls 43 which is opposite to the second opening 43h across the second medical space S2. The exhaust port 49 is provided so as to penetrate a center part of the rear wall portion 43b in the front-to-rear direction. An exhaust device 48 is installed in the second container 40 such that the exhaust device covers the exhaust port 49. The configuration of the exhaust device 48 is not limited to a specific one. For example, the exhaust device 48 may include a fan 48a and a filter 48b.

Once the exhaust device 48 is turned on to cause the fan 48a to rotate, the air outside the first container 10 is taken into the first container 10 through the intake port 18. Then, the air that has flowed into the first container 10 flows inside the coupling mechanism body 73 from one side to the other side in the axial direction. The air that has entered the second container 40 from the coupling mechanism body 73 passes through the filter 48b to be discharged rearward from the exhaust port 49. In this way, it is possible to collect dust in the air and maintain a negative pressure inside the structural unit 1 to suppress possible leakage of pathogenic bacteria and viruses to the outside.

As discussed thus far, in the structural unit 1 according to the instant embodiment, the exhaust device 48 is installed in only one of the first container 10 and the second container 40. Therefore, the space which the exhaust device 48 occupies in the first medical space S1 and/or the second medical space S2 can be minimized. As such, more space can be used to provide medical services. Furthermore, the exhaust device 48 can maintain a negative pressure in the first medical space S1 and the second medical space S2, thereby suppressing possible leakage of pathogenic bacteria and viruses from the inside of the structural unit 1 to the outside.

Further, in this embodiment, the first container 10 and the second container 40 of the structural unit 1 are connected one behind the other via the coupling mechanism body 73, and the intake port 18 is provided at the front end portion of the first container 10, while the exhaust port 49 is arranged at the rear end portion of the second container 40. Therefore, the air flows smoothly from the front to the rear. For this reason, it is preferable to arrange, for example, a storage place for medical supplies and/or a waiting space for medical personnel on the front area of the first container 10, and to secure a waiting space for patients on the rear area of the second container 40. This makes it possible to reduce the risk of pathogenic bacteria or viruses flowing with the air flow toward medical personnel even if pathogenic bacteria or viruses are brought into the structural unit 1 by patients.

The fourth embodiment has been described above. However, the present invention is not limited to this example.

In the fourth embodiment described above, the structural unit 1 includes two containers 10, 40. However, this is not intended to be limiting. For example, instead of the above construction, three or more containers may be connected one after another in the front-to-rear direction. Even in that case, the above-mentioned smooth air flow can be achieved by arranging a plurality of connection members such that their axial directions are directed in the front-to-rear direction.

In the fourth embodiment described above, the coupling mechanism body has a bellows shape. However, the shape is not necessarily limited to this shape. Instead of the above construction, the coupling mechanism body may have a simple rectangular tube shape. Furthermore, the shape of the coupling mechanism body is not necessarily limited to one that extends straightly in the axial direction. For example, the coupling mechanism body may instead be shaped such that it is bent in the middle part in the axial direction.

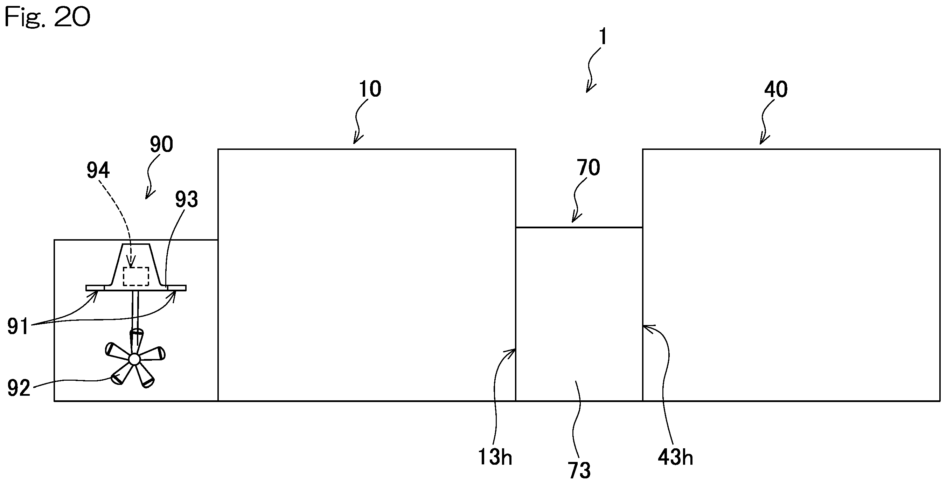

In the fourth embodiment described above, the power generators include a wind power generation device and a photovoltaic generator. However, this is not intended to be limiting. Alternatively or in addition to the above construction, a hydroelectric generator may be installed in the medical container unit. Fig. 20 shows an example of a medical container unit equipped with a hydroelectric generator.

As illustrated in Fig. 20, a structural unit 1 according to a fifth embodiment of the present invention includes a hydroelectric generator 90. The hydroelectric generator 90 includes a base 91 configured to be installed in a water channel, a hydroelectric turbine 92, a frame 93 which holds the hydroelectric turbine 92, and a generator 94 which is supported by the frame 93 and configured to generate power as the hydroelectric turbine 92 rotates. However, the specific configuration of the hydroelectric generator is not limited to this.

That is, the structural unit may include at least one power generator selected from a wind turbine generator, a photovoltaic generator, and a hydroelectric generator.

In addition to the power generators, the structural unit may include a grid power system connection unit configured to receive power supplied from a grid power system. This makes it possible to use a power generator as a primary power supply for electrical equipment while using a grid power system to compensate for temporary shortage of power generation.

In the fourth embodiment described above, the first opening 13h is provided in the rear wall portion 13b of the peripheral walls 13, and the second opening 43h is provided in the front wall portion 43a of the peripheral walls 43. Such a configuration is preferable in terms of suppressing stagnation of air flow. However, this is not intended to be limiting. Openings may be provided in other wall portions of the peripheral walls.

In the fourth embodiment described above, as illustrated in Fig. 17, the exhaust device 48 is installed in the second container 40. However, this is not intended to be limiting. The exhaust device may be installed in the first container.

A convex portion may be provided in an annular shape on the rear surface of the rear wall portion 13b so as to surround the outer edge portion of the first opening 13h of Fig. 19A, and the first connection member 71 may be positioned with respect to the rear wall portion 13b when the flange part 71b of the first connection member 71 is brought into contact with the convex portion. Similarly, a convex portion may be provided in an annular shape on the front surface of the front wall portion 43a so as to surround the outer edge portion of the second opening 43h of Fig. 19B, and the second connection member 72 may be positioned with respect to the front wall portion 43a when the flange part 72b of the second connection member 72 is brought into contact with the convex portion.

Although the present invention has been fully described in connection with the embodiments thereof, the embodiments disclosed herein are merely examples in all respects and are not to be taken as limiting the scope of the present invention in any way whatsoever. The scope of the present invention is to be determined by the appended claims, not by the above description, and is intended to include any change made within the scope of claims. That is, the present invention in not limited to the embodiments described above, and various additions, modifications, or omissions may be made without departing from the scope of the invention.

### [Reference Numerals]

- 1: structural unit
- 2: power supply mechanism
- 4: structure (mobile structure)
- 10: first container (structure)
- 11: first top wall
- 12: first bottom wall
- 13: first peripheral wall
- 13a: front wall portion
- 13b: rear wall portion
- 13cb: recessed part
- 18: intake port
- 30: wind turbine generator
- 40: second container (structure)
- 41: second top wall
- 42: second bottom wall
- 43: second peripheral wall
- 43a: front wall portion
- 43b: rear wall portion
- 13h: first opening
- 43h: second opening
- 48: exhaust device
- 49: exhaust port
- 51: partition wall
- 53: electrical equipment
- 70: coupling mechanism
- 71: first connection member (coupling mechanism fixing member)
- 80: photovoltaic generator
- 80a: solar panel
- 80b: panel mount
- 81: base member
- S1: space
- M: storage

## Claims

1. A mobile structure (4) comprising:
a structure having a box-like shape, the structure being movable and having a space inside;
a wind turbine generator supported on a peripheral wall of the structure;
a photovoltaic generator (80) provided to the structure; and
a power supply mechanism (2) configured to supply power generated by the wind turbine generator and the photovoltaic generator (80) to electrical equipment provided to the structure,
wherein the structure has a storage inside, the storage housing the power supply mechanism (2),
the storage faces an inner surface of the peripheral wall on which the wind turbine generator is supported,
the structure includes a partition wall inside, the partition wall partitioning the storage from the space,
the photovoltaic generator (80) includes a solar panel and a panel mount that supports the solar panel on a top wall or an outer surface of a peripheral wall of the structure, **characterised in that**:
the panel mount includes a base member (81) that is welded to a beam (11aa) of the structure,
the structure is provided with a linear motion guiding device (61) and a lifting device (65), the linear motion guiding device configured to guide the wind turbine generator so that the wind turbine generator can be lifted and lowered between an upper position for use and a lower position for transport and installation, the lifting device configured to lift and lower the wind turbine generator, and
at the lower position, the wind turbine generator is placed lower than the linear motion guiding device and the lifting device.

2. The mobile structure (4) as claimed in claim 1, wherein the structure comprises a structure having a box-like shape and including a top wall, a bottom wall, and peripheral walls located between the top wall and the bottom wall, the structure having a space inside for at least one of living, office duties, work, rest, business, and medical services.

3. The mobile structure (4) as claimed in claim 1 or 2, wherein a peripheral wall of the structure includes, on an outer surface thereof, an outer peripheral edge part and a recessed part that is recessed toward an inside of the structure with respect to the outer peripheral edge part, and the photovoltaic generator (80) is supported in the recessed part.

4. The mobile structure (4) as claimed in claim 3, wherein the photovoltaic generator (80) is supported through a rotation support member provided on an upper end portion of the peripheral wall, and the photovoltaic generator (80) is openable and closable about a rotation axis of the rotation support member between a closed position in which the photovoltaic generator (80) is placed along the recessed part and an open position in which a lower end portion of the photovoltaic generator (80) is separated from the recessed part.

5. The mobile structure (4) as claimed in any one of claims 1 to 4, wherein the structure comprises a shipping container.

6. A structural unit comprising:
the mobile structure (4) as claimed in any one of claims 1 to 5; and
a further structure including a top wall, a bottom wall, and peripheral walls and being movable, the further structure having a space inside,
wherein each of the structures has an opening which allows a person to pass through, and
the structural unit includes a coupling mechanism having a tubular shape, the coupling mechanism configured to airtightly couple the openings of the structures arranged adjacent to each other and connect the spaces of the adjacent structures so that a person can move between the spaces.

7. The structural unit as claimed in claim 6, wherein the coupling mechanism includes
a coupling mechanism fixing member that is fixed to an outer surface of one of the peripheral walls and provided in an annular shape along a peripheral edge portion of the opening,
a coupling mechanism body that is a tubular body for connecting the openings of the adjacent structures, and
a sealing member provided between an axial end portion of the coupling mechanism body and the coupling mechanism fixing member.

8. The structural unit as claimed in claim 7, wherein the coupling mechanism body has a bellows shape that is expandable and contractable in an axial direction.

9. The structural unit as claimed in any one of claims 6 to 8, wherein an exhaust device configured to discharge air within the structural unit to an outside of the structural unit is installed in only one of a plurality of containers.

10. The structural unit as claimed in claim 9, wherein one of the adjacent structures includes an intake port configured to take air outside of the structural unit into inside of the structural unit, the intake port located in one of the peripheral walls which is opposite to the opening, and
the other of the adjacent structures includes the exhaust device on one of the peripheral walls which is opposite to the opening.

11. The structural unit as claimed in any one of claims 6 to 10, further comprising a hydroelectric generator.

## Patentansprüche

1. Mobile Struktur (4), umfassend:
eine Struktur, die eine kastenähnliche Form aufweist, wobei die Struktur beweglich ist und einen Raum im Inneren aufweist;
einen Windkraftanlagengenerator, der auf einer Umfangswand der Struktur gestützt wird;
einen Photovoltaikgenerator (80), welcher der Struktur bereitgestellt wird; und
einen Stromversorgungsmechanismus (2), der konfiguriert ist, um die vom Windkraftanlagengenerator und dem Photovoltaikgenerator (80) erzeugte Energie der elektrischen Ausrüstung zuzuführen, die der Struktur bereitgestellt wird,
wobei die Struktur im Inneren einen Speicher aufweist, wobei der Speicher den Stromversorgungsmechanismus (2) unterbringt,
der Speicher einer Innenoberfläche der Umfangswand zugewandt ist, auf welcher der Windkraftanlagengenerator gestützt ist,
die Struktur eine Trennwand im Inneren beinhaltet, wobei die Trennwand den Speicher vom Raum trennt,
der Photovoltaikgenerator (80) ein Solarpaneel und eine Paneel-Halterung beinhaltet, die das Solarpaneel an einer oberen Wand oder an einer Außenoberfläche einer Umfangswand der Struktur stützt, **dadurch gekennzeichnet, dass**:
die Paneel-Halterung ein Basiselement (81) beinhaltet, das an eine Träger (11aa) der Struktur geschweißt ist,
die Struktur mit einer linearen Bewegungsführungsvorrichtung (61) und einer Hebevorrichtung (65) bereitgestellt ist,
die lineare Bewegungsführungsvorrichtung ist konfiguriert, um den Windkraftanlagengenerator zu führen, sodass der Windkraftanlagengenerator zwischen einer oberen Position zum Gebrauch und einer unteren Position für Transport und Installation angehoben und abgesenkt werden kann, wobei die Hebevorrichtung konfiguriert ist, um den Windkraftanlagengenerator anzuheben und abzusenken, und
der Windkraftanlagengenerator in der unteren Position unterhalb der linearen Bewegungsführungsvorrichtung und der Hebevorrichtung platziert ist.

2. Mobile Struktur (4) nach Anspruch 1, wobei die Struktur eine Struktur umfasst, die eine kastenähnliche Form aufweist und eine obere Wand, eine untere Wand und Umfangswände beinhaltet, die sich zwischen der oberen Wand und der unteren Wand befinden, wobei die Struktur einen Raum im Inneren für mindestens eines von Wohnen, Büroarbeiten, Arbeiten, Erholen, Geschäfte und medizinische Dienstleistungen aufweist.

3. Mobile Struktur (4) nach Anspruch 1 oder 2, wobei eine Umfangswand der Struktur an einer ihrer Außenoberflächen einen Außenumfangskantenteil und einen ausgesparten Teil beinhaltet, der in Richtung einer Innenseite der Struktur in Bezug auf den Außenumfangskantenteil ausgespart ist, und der Photovoltaikgenerator (80) in dem ausgesparten Teil gestützt wird.

4. Mobile Struktur (4) nach Anspruch 3, wobei der Photovoltaikgenerator (80) durch ein an einem oberen Endabschnitt der Umfangswand bereitgestelltes Drehstützelement gestützt wird, und der Photovoltaikgenerator (80) um eine Drehachse des Drehstützelements zwischen einer geschlossenen Position, in welcher der Photovoltaikgenerator (80) entlang des ausgesparten Teils platziert ist, und einer offenen Position, in der ein unterer Endabschnitt des Photovoltaikgenerators (80) von dem ausgesparten Teil getrennt ist, geöffnet und geschlossen werden kann.

5. Mobile Struktur (4) nach einem der Ansprüche 1 bis 4, wobei die Struktur einen Versandbehälter umfasst.

6. Struktureinheit, umfassend:
die mobile Struktur (4) nach einem der Ansprüche 1 bis 5; und
eine weitere Struktur, die eine obere Wand, eine untere Wand und Umfangswände beinhaltet und beweglich ist, wobei die weitere Struktur einen Raum im Inneren aufweist,
wobei jede der Strukturen eine Öffnung aufweist, die es einer Person erlaubt, hindurchzugehen, und
die Struktureinheit einen Kopplungsmechanismus beinhaltet, der eine rohrförmige Form aufweist, wobei der Kopplungsmechanismus konfiguriert ist, um die Öffnungen der nebeneinander angeordneten Strukturen luftdicht miteinander zu koppeln und die Räume der benachbarten Strukturen zu verbinden, sodass sich eine Person zwischen den Räumen bewegen kann.

7. Struktureinheit nach Anspruch 6, wobei der Kopplungsmechanismus beinhaltet:
ein Kopplungsmechanismus-Befestigungselement, das an einer Außenoberfläche einer der Umfangswände fixiert ist und in ringförmiger Form entlang eines Umfangskantenabschnitts der Öffnung bereitgestellt ist,
einen Kopplungsmechanismuskörper, der ein rohrförmiger Körper zum Verbinden der Öffnungen der benachbarten Strukturen ist, und
ein Dichtungselement, das zwischen einem axialen Endabschnitt des Kopplungsmechanismuskörpers und dem Kupplungsmechanismus-Befestigungselement bereitgestellt ist.

8. Struktureinheit nach Anspruch 7, wobei der Kopplungsmechanismuskörper eine Balgform aufweist, die sich in axialer Richtung ausdehnen und zusammenziehen lässt.

9. Struktureinheit nach einem der Ansprüche 6 bis 8, wobei eine Abluftvorrichtung, die konfiguriert ist, um Luft innerhalb der Struktureinheit nach außen abzuleiten, nur in einem einer Vielzahl von Behältern installiert ist.

10. Struktureinheit nach Anspruch 9, wobei eine der benachbarten Strukturen einen Einlassanschluss beinhaltet, der konfiguriert ist, um Luft von außerhalb der Struktureinheit ins Innere der Struktureinheit aufzunehmen, wobei sich der Einlassanschluss in einer der Umfangswände befindet, die der Öffnung gegenüberliegt, und
die andere der benachbarten Strukturen die Abluftvorrichtung an einer der Umfangswände beinhaltet, die der Öffnung gegenüberliegt.

11. Struktureinheit nach einem der Ansprüche 6 bis 10, die weiter einen hydroelektrischen Generator umfasst.

## Revendications

1. Structure mobile (4) comprenant :
une structure ayant une forme de type boîte, la structure étant mobile et ayant un espace à l'intérieur ;
un générateur à turbine éolienne supporté sur une paroi périphérique de la structure ;
un générateur photovoltaïque (80) disposé sur la structure ; et
un mécanisme d'alimentation électrique (2) configuré pour alimenter en énergie, générée par le générateur à turbine éolienne et le générateur photovoltaïque (80), un équipement électrique disposé sur la structure,
dans laquelle la structure a un stockage à l'intérieur, le stockage abritant le mécanisme d'alimentation électrique (2),
le stockage fait face à une surface intérieure de la paroi périphérique sur laquelle est supporté le générateur à turbine éolienne,
la structure comporte une cloison à l'intérieur, la cloison séparant le stockage vis-à-vis de l'espace,
le générateur photovoltaïque (80) comporte un panneau solaire et une monture de panneau qui supporte le panneau solaire sur une paroi supérieure ou une surface extérieure d'une paroi périphérique de la structure, **caractérisée en ce que** :
la monture de panneau comporte un organe de base (81) qui est soudé à une poutre (11aa) de la structure,
la structure est pourvue d'un dispositif de guidage de mouvement linéaire (61) et d'un dispositif de levage (65),
le dispositif de guidage de mouvement linéaire étant configuré pour guider le générateur à turbine éolienne de sorte que le générateur à turbine éolienne peut être soulevé et abaissé entre une position supérieure pour utilisation et une position inférieure pour transport et installation, le dispositif de levage étant configuré pour soulever et abaisser le générateur à turbine éolienne, et
à la position inférieure, le générateur à turbine éolienne est placé plus bas que le dispositif de guidage de mouvement linéaire et le dispositif de levage.

2. Structure mobile (4) selon la revendication 1, dans laquelle la structure comprend une structure ayant une forme de type boîte et comportant une paroi supérieure, une paroi inférieure et des parois périphériques situées entre la paroi supérieure et la paroi inférieure, la structure ayant un espace à l'intérieur pour au moins l'un parmi un espace de vie, de tâches de bureau, de travail, de détente, de commerce et de services médicaux.

3. Structure mobile (4) selon la revendication 1 ou 2, dans laquelle une paroi périphérique de la structure comporte, sur une surface extérieure de celle-ci, une partie de bord périphérique extérieur et une partie en retrait qui est en retrait vers un intérieur de la structure par rapport à la partie de bord périphérique extérieure, et le générateur photovoltaïque (80) est supporté dans la partie en retrait.

4. Structure mobile (4) selon la revendication 3, dans laquelle le générateur photovoltaïque (80) est supporté par un organe de support de rotation agencé sur une partie d'extrémité supérieure de la paroi périphérique, et le générateur photovoltaïque (80) peut être ouvert et fermé autour d'un axe de rotation de l'organe de support de rotation entre une position fermée dans laquelle le générateur photovoltaïque (80) est placé le long de la partie en retrait et une position ouverte dans laquelle une partie d'extrémité inférieure du générateur photovoltaïque (80) est séparée de la partie en retrait.

5. Structure mobile (4) selon l'une des revendications 1 à 4, dans laquelle la structure comprend un conteneur d'expédition.

6. Unité structurale comprenant :
la structure mobile (4) selon l'une des revendications 1 à 5 ; et
une autre structure comportant une paroi supérieure, une paroi inférieure et des parois périphériques et étant mobile, l'autre structure ayant un espace à l'intérieur,
dans laquelle chacune des structures a une ouverture permettant à une personne de passer à travers, et
l'unité structurale comporte un mécanisme de couplage ayant une forme tubulaire, le mécanisme de couplage étant configuré pour coupler de manière étanche à l'air les ouvertures des structures agencées adjacentes l'une à l'autre et relier les espaces des structures adjacentes de sorte qu'une personne peut se déplacer entre les espaces.

7. Unité structurale selon la revendication 6, dans laquelle le mécanisme de couplage comporte
un organe de fixation de mécanisme de couplage qui est fixé à une surface extérieure de l'une des parois périphériques et agencé selon une forme annulaire le long d'une portion de bord périphérique de l'ouverture,
un corps de mécanisme de couplage qui est un corps tubulaire destiné à relier les ouvertures des structures adjacentes, et
un organe d'étanchéité disposé entre une partie d'extrémité axiale du corps de mécanisme de couplage et l'organe de fixation de mécanisme de couplage.

8. Unité structurale selon la revendication 7, dans laquelle le corps de mécanisme de couplage a une forme de soufflet qui peut s'étendre et se contracter dans une direction axiale.

9. Unité structurale selon l'une des revendications 6 à 8, dans laquelle un dispositif d'échappement configuré pour évacuer de l'air dans l'unité structurale vers un extérieur de l'unité structurale est installé dans un seul d'une pluralité de conteneurs.

10. Unité structurale selon la revendication 9, dans laquelle l'une des structures adjacentes comporte un orifice d'admission configuré pour amener de l'air de l'extérieur de l'unité structurale jusqu'à l'intérieur de l'unité structurale, l'orifice d'admission étant situé dans l'une des parois périphériques qui est en regard de l'ouverture, et
l'autre des structures adjacentes comporte le dispositif d'échappement sur l'une des parois périphériques qui est en regard de l'ouverture.

11. Unité structurale selon l'une des revendications 6 à 10, comprenant en outre un générateur hydroélectrique.
